# EUROPEAN PATENT SPECIFICATION

(11) **EP 0 651 481 B1**
(45) Date of publication and mention of the grant of the patent: **21.05.1997**
(21) Application number: 94203086.7
(22) Date of filing: 24.10.1994
(51) Int. Cl.: H02B 1/20

(54) **A bridge connector stirrup and a method for its manufacture**
Überbrückungsklemme und eine Methode für ihre Herstellung
Connecteur à pont et une méthode pour sa fabrication

(30) Priority: 29.10.1993 SE 9303561
(43) Date of publication of application: 03.05.1995
(73) Proprietor: GARO Aktiebolag, 335 00 Gnosjö (SE)
(72) Inventor: Johansson, Lennart, S-335 33 Gnosjö (SE)
(74) Representative: Wallengren, Yngvar

(56) References cited:
- EP-A- 0 548 530
- DE-A- 2 436 235
- DE-A- 3 813 099

## Description

### TECHNICAL FIELD

The present invention relates to a bridge connector stirrup for electrical interconnection of components in two different arrays of components in a central electrical installation, as described in the opening part of claim 1.

The present invention also relates to a method of manufacturing a bridge connector stirrup for electrical interconnection of components in two arrays of components in a central electrical installation as described in the opening part of claim 8.

### BACKGROUND ART

Central electrical installations often house components such as fuse boxes, automatic fuses, relays, contactors and the like, side-by-side in arrays where the arrays are generally placed at standardized spacing in a vertical direction from one another. In the electrical interconnection of different components in such an installation, use has previously been made of conventional conductor material in linear lengths which are cut on site, stripped of insulation at their end regions and thereafter connected between the components. Such a mode of approach is extremely time-consuming and gives a work result which defies ready overview, in that the wiring will easily assume the appearance of a "mare's nest".

DE 3 813 099 discloses in fig 2 a bridge connector stirrup that has terminal portions at opposite ends, said terminal portions being directed in the same direction and further located along a common center line. The terminal portions are provided at opposite ends of a connecting portion which is parallel with the centerline and located at a distance therefrom.

The connector stirrups of DE 3 813 099 are separately made and lacks insulation.

### PROBLEM STRUCTURE

The present invention has for its object to realise a bridge connector stirrup of the type disclosed by way of introduction, the bridge connector stirrup being designed in such a manner that it substantially rationalises interconnection work in a central electrical installation, and that it provides for neat and visually comprehensible wiring at the same time as space requirements are reduced to a minimum. The present invention further has for its object to realise a bridge connector stirrup which is simple and economical to manufacture and which is very easy to mount in place.

The present invention yet further has for its object to realise a method of producing the bridge connector stirrup intimated by way of introduction, the method being devised to make for rational and simple production, at the same time as employment of the connector is facilitated.

### SOLUTION

The objects forming the basis of the present invention will be attained in respect of the bridge connector stirrup if it is given the characteristics of the characterizing part of claim 1.

The objects forming the basis of the present invention will be attained in respect of the method of manufacture if this method is given the characteristics of the characterizing part of claim 8.

Further advantages will be attained according to the present invention if the bridge connector stirrup is also given one or more of the characterizing features as set forth in appended Claims 2 to 7, and if the method is also given one or more of the characterizing features as set forth in appended Claims 9 to 11.

### BRIEF DESCRIPTION OF THE ACCOMPANYING DRAWINGS

The present invention will now be described in greater detail hereinbelow, with particular reference to the accompanying Drawings. In the accompanying Drawings:
- Fig. 1: shows in perspective a portion of a central electrical installation, two mutually superposed arrays of electric components being particularly apparent;
- Fig. 2: shows a bridge connector stirrup according to the invention, seen in perspective;
- Fig. 3: shows a bridge connector stirrup according to Fig. 2 on a larger scale seen in side elevation; and
- Fig. 4: shows the bridge connector stirrup according to Figs. 2 and 3 in plan view.

### DESCRIPTION OF PREFERRED EMBODIMENT

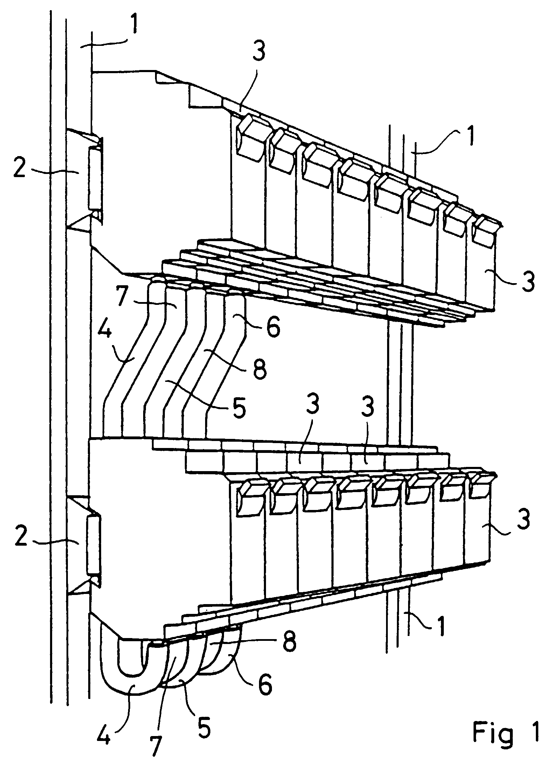

Fig. 1 shows a part of a central electrical installation which is constructed from vertical rails 1 or assembly profiles which may be secured to a wall or in the bottom of a cabinet. Between the vertical rails, there extend a number of approximately horizontal rails 2 which are secured in the vertical rails, as a rule at standardized modular spacing. Thus, a central electrical installation may comprise a number of vertical, laterally spaced apart rails which carry a plurality of mutually superposed horizontal rails. The size and design of such a rail system may vary widely from case to case and be constructed in accordance with a modular system so as to meet specific requirements.

The horizontal rails 2 are designed so as to serve as supports for electrical components 3, such as automatic fuses, contactors, transformers, relays etc. These components 3 are of standardized dimensions and are placed side-by-side along the horizontal rails 2 so that a central installation will hereby be integral in a modular system.

Fig. 1 shows a bridge connector stirrup which realises electrical bridging contact between the components 3 in two mutually superposed arrays. In the illustrated embodiment, the bridge connector stirrup comprises a number (three in this specific case) of insulated conductors 4, 5 and 6 which are joined together to form a unit via junction pieces 7 and 8.

In Fig. 1, the bridging contact takes place between components 3 disposed vertically in relation to one another, but embodiments are also possible in which such bridging contact may be effected between components which are not located straight over one another but which are displaced one or more steps in the lateral direction.

The bridge connector stirrup is designed in such a manner that each conductor has end regions which are turned to face in the same direction, whereby the bridge connector stirrup will be insertable in one direction in the terminal or connector devices on the components 3 located above one another without needing to be deformed or bent. In the embodiment which is intended for bridging between components located straight above one another, the end regions of each conductor intended for interconnection with the components are suitably directed in such a manner that they substantially have a common centre axis.

In another embodiment which is intended for bridging connection between components which are laterally offset, the centre axes of the end regions are parallel with one another and are displaced in the lateral direction one or more modular dimensions.

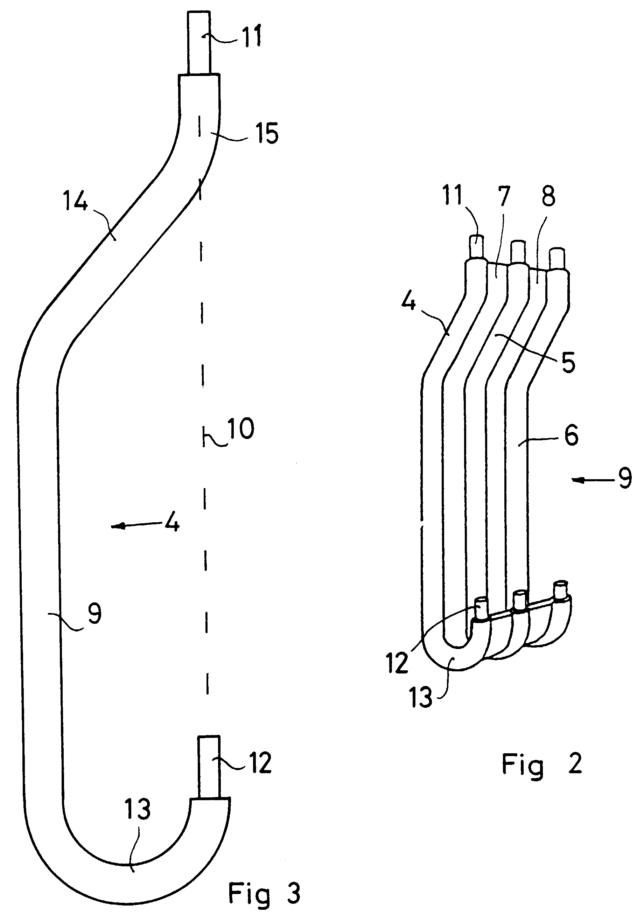

The bridge connector stirrup has an intermediate section 9 which is substantially straight and which is located a distance from the above-mentioned central or connection axis 10 between the end regions 11 and 12 of the conductor. Fig. 3 shows the conductor 4 which, in Fig. 2, is located most proximal the observer of the Drawing, but the other conductors 5 and 6 are of course designed in the same manner. It will be apparent from this Figure that the conductor 4 between the intermediate section 9 and the lower end region 12 has a recurved portion 13 where the total bending angle amounts to approximately 180°. From this it follows that the longitudinal direction of the intermediate section 9 and the longitudinal direction of the lower end region 12 are approximately parallel with one another, for which reason the intermediate section 9 will also be substantially parallel with the interconnection line or axis 10 through both of the end regions 11 and 12.

In the embodiment for laterally offset bridging connection, the centre axis of the lower end region 12 and the longitudinal axis of the intermediate section 9 lie in mutually parallel planes but make an angle with one another.

In Fig. 3, the recurved portion 13 is shown as a bend approximately along a semi-circular arc, but this bend may of course consist of a number of part bends with varying angles of curvature, and possibly interjacent straight sections. Constructions of polygonal configuration with more or less sharp corners may also be conceivable.

At the upper end of the intermediate section 9, a transitional portion 14 connects where the conductor 4 once again approaches the connection line or axis 10 between the two end regions 11 and 12. At the upper end, the transitional portion 14 merges into the upper end section 11 via a bend 15.

The free area between the interconnection axis or line 10 and the intermediate section 9 is at least so large that the end region 12 may be secured in a suitable connection device or terminal on a component 3, at the same time as the intermediate section 9 is disposed on the rear side of the horizontal rail 2.

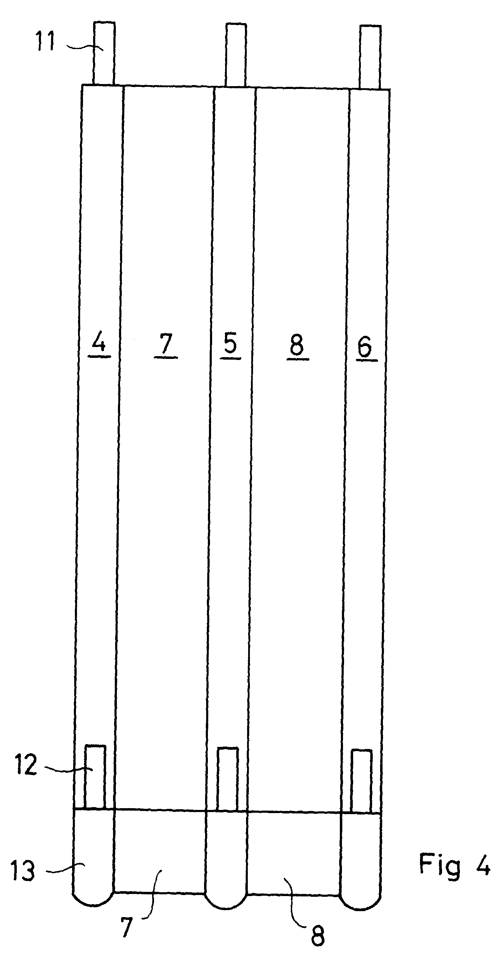

As will be apparent from Figs. 2 and 4, the different conductors 4, 5 and 6 are interconnected with one another by the intermediary of junction pieces 7 and 8. These are elongate, strip-shaped portions of the same insulation material as the insulation material enveloping the conductors and is of one piece manufacture therewith. The central distance between closely adjacent conductors 4 and 5; and 5 and 6, respectively, is adapted to the modular spacing between the connection or terminal devices in the components 3. In one practical embodiment, this implies that the outer diameter or transverse dimension of an insulated conductor is approximately half of the width of junction pieces 7 or 8 interconnecting two adjacent conductors.

Manufacture of the bridge connector stirrup according to the invention proceeds such that a profile is extruded in linear lengths, this profile being given pipe-shaped or tubular insulation sections with a longitudinal channel for accommodating wire or rod-shaped conductor material. Adjacent insulation sections are mutually interconnected via junction pieces which are elongate, strip or band-shaped portions of the same insulation material as the insulation sections. The junction pieces suitably connect to the insulation sections in the region of common diametric planes thereto so that the total profile will thereby be elongate and planar with three parallel insulation sections as shown in the illustrated embodiment. Production is suitably effected by extrusion of a plastic material.

Once the profile has been extruded in linear lengths, it is cut to suitable pieces of a predetermined length, in which the length is adapted in response to the distance between the connection or terminal devices on components 3 located above one another in two superjacent rails 2. The bridge connector stirrup may possibly be dimensioned for bridging connection not only between closely adjacent horizontal rails but also between every other or every third horizontal rail.

In the embodiment which is intended for bridging connection between components located straight above one another, the cutting operation is effected approximately at right angles to the longitudinal direction of the profile. In the embodiment which is intended for laterally offset bridging connection, the profile is, on the other hand, cut obliquely at an angle which deviates from 90° in relation to the longitudinal direction of the profile. In both embodiments, the end surfaces of the cut profiles are straight and approximately parallel with one another.

Conductor material in rod or wire form is cut into pieces of predetermined lengths, the length of the conductor material exceeding the length of the profile sections by an amount at least corresponding to the length of the uninsulated end regions 11 and 12 in the finished state of the bridge connector stirrup. The thus cut pieces of conductor material are passed straight or substantially straight into the cut pieces of the profile, the channels in the insulation sections of the profile having the same cross-sectional configuration as the conductor material and the same or slightly smaller transverse dimension or diameter. in such instance, the insertion of conductor material may be carried out without applying any measure of force and without the profile material being substantially deformed. After the insertion or forcible introduction of the conductor material, the bridge connector stirrup is still in the straight state but, after insertion of the conductor material, is bent to the contemplated shape.

In its simplest embodiment, the subject matter of the present invention may consist of a single conductor with associated insulation shaped in approximately the manner shown in Fig. 3. As further embodiments, bridge connector stirrups with two or preferably three conductors parallel to one another are also conceivable.

## Claims

1. A bridge connector stirrup for electrical interconnection of components (3) in two different arrays (2) of components in a central electrical installation, comprising at least one insulated conductor (4-6) of a predetermined length, the conductor being connectable with its end regions (11, 12) to one component in each array, the arrays being at standardized spacing, wherein the conductor (4-6) has both of its end regions (11, 12) turned to face in the same direction; and an interconnection axis or line (10) between the end regions is located in spaced apart relationship from an intermediate portion (9) of the bridge connector stirrup interconnecting the end regions, **characterized in that,** each conductor (4-6) has a hose-shaped insulation member, the insulation members being interconnected in a spaced apart relationship via junction pieces (7, 8) of insulation material, thereby to form an assembly.

2. The bridge connector stirrup as claimed in claim 1, **characterized in that,** the end regions (11, 12) have a substantially common centre line (10).

3. The bridge connector stirrup as claimed in claim 1, **characterized in that,** the end regions (11, 12) have centre lines which are laterally offset and parallel with one another.

4. The bridge connector stirrup as claimed in any one of claims 1 to 3, **characterized in that,** it has three substanstially mutually parallel conductors (4-6).

5. The bridge connector stirrup as claimed in any one of claims 1 to 4, **characterized in that,** it is of a length which amounts to a whole number multiple of the array spacing in the central electrical installation.

6. The bridge connector stirrup as claimed in claim 6 or 7, **characterized in that,** the junction pieces (7, 8) are of greater width than one outer transverse dimension of the insulation members, preferably approximately twice as great in width.

7. The bridge connector stirrup as claimed in any one of claims 1-6, **characterized in that,** the junction pieces (7, 8) are stripor band shaped.

8. A method of producing a bridge connector stirrup for electrical interconnection of components (3) in two arrays of components in a central electrical installation, comprising the production of insulated conductors (4-6) of predetermined length and form, **characterized in that,** a number of tubular insulating members are produced from an insulating, flexible material, said members are given predetermined length and are interconnected by means of junction pieces (7, 8), that rod or wireshaped conductor material is cut into pieces having a greater length than that of the insulating members said pieces of conductor material being inserted into the insulating members and that the insulating members with the pieces of conductor material inserted therein are bent to the intended shape.

9. The method as claimed in Claim 8, **characterized in that,** the insulating members with pieces of conductor material inserted therein is bent so that opposing end regions (11, 12) of the pieces of conductor material are turned to face in the same direction; **and that** an interconnection line (10) between such end regions is located in spaced apart relationship from an intermediate section (9) interconnecting the end regions.

10. The method as claimed in any one of Claims 8 or 9, **characterized in that,** the insulating members with pieces of conductor material inserted therein are bent to a shape in which opposing end regions (11, 12) of the pieces of conductor material have a substantially common centre line (10).

11. The method as claimed in any one of Claims 8 or 9, **characterized in that,** the insulating members with pieces of conductor material inserted therein are bent to a shape where opposing end regions (11, 12) of the pieces of conductor material have centre axes which are laterally offset and parallel with one another.

## Patentansprüche

1. Brückenartiger Verbindungsbügel für die elektrische Verbindung von in zwei verschiedenen Reihen (2) angeordneten Bauteilen in einer zentralen elektrischen Installation, mit wenigstens einem isolierten Leiter (4 bis 6) bestimmter Länge, wobei der Leiter mit seinen Endbereichen (11, 12) mit einem Bauteil in jeder Reihe verbindbar ist, wobei die Reihen in einem standardisierten Abstand verlaufen und wobei die beiden Endbereiche (11, 12) des Leiters (4 bis 6) in dieselbe Richtung zeigen, und mit einer Verbindungsachse oder - linie (10), die zwischen den Endbereichen in einem Abstand von einem die Endbereiche verbindenden Zwischenbereich (9) des brückenartigen Verbindungsbügels angeordnet ist, **dadurch gekennzeichnet,** dass jeder Leiter (4 bis 6) ein schlauchartiges Isolierelement besitzt und dass die Isolierelemente über Verbindungsstücke (7, 8) aus Isoliermaterial im Abstand voneinander angeordnet sind, wodurch ein Einheit gebildet ist.

2. Verbindungsbügel nach Anspruch 1, dadurch gekennzeichnet, dass die Endbereiche (11, 12) eine im wesentlichen gemeinsame Mittellinie (10) besitzen.

3. Verbindungsbügel nach Anspruch 1, dadurch gekennzeichnet, dass die Endbereiche (11, 12) Mittellinien besitzen, die seitlich zueinander versetzt und parallel zueinander angeordnet sind.

4. Verbindungsbügel nach einem der Ansprüche 1 bis 3, dadurch gekennzeichnet, dass er drei im wesentlichen parallele Leiter (4 bis 6) aufweist.

5. Verbindungsbügel nach einem der Ansprüche 1 bis 4, dadurch gekennzeichnet, dass er eine Länge besitzt, die ein ganzzahliges Vielfaches des Reihenabstandes der zentralen elektrischen Installation beträgt.

6. Verbindungsbügel nach Anspruch 1-5, dadurch gekennzeichnet, dass die Verbindungsstücke (7, 8) eine größere Breite aufweisen, als der äußeren Querabmessung der Isolierelemente entspricht, vorzugsweise etwa 2 mal so breit sind.

7. Verbindungsbügel nach einem der Ansprüche 1 bis 6, dadurch gekennzeichnet, dass die Verbindungsstücke (7, 8) streifen- oder bandförmig sind.

8. Verfahren zum Herstellen eines brückenartigen Verbindungsbügels zur elektrischen Verbindung von in zwei Bauteilereihen angeordneten Bauteilen in einer zentralen elektrischen Installation, enthaltend die Herstellung von isolierten Leitern (4 bis 6) bestimmter Länge und Form, dadurch gekennzeichnet, dass eine Anzahl rohrförmiger Isolierelemente aus einem isolierendem flexiblen Material hergestellt werden, wobei die Elemente eine bestimmte Länge erhalten und mit Hilfe von Verbindungsstücken (7, 8) miteinander verbunden werden, dass das stab- oder drahtförmige Leitermaterial in Stücke geschnitten wird, die eine größere Länge als die der Isolierelemente besitzen, wobei die Leitermaterialstücke in die Isolierelemente eingeschoben werden, und dass die Isolierelemente mit den eingeschobenen Leitermaterialstücken in die gewünschte Form gebogen werden.

9. Verfahren nach Anspruch 8, dadurch gekennzeichnet, dass die Isolierelemente mit eingeschobenen Leitermaterialstücken derart gebogen werden, dass die einander abgewandten Endbereiche (11, 12) der Leitermaterialstücke in dieselbe Richtung gebogen zeigen, und dass eine Verbindungslinie (10) zwischen diesen Endbereichen in einem Abstand von einem die Endbereiche verbindenden Zwischenabschnitt (9) angeordnet werden.

10. Verfahren nach Anspruch 8 oder 9, dadurch gekennzeichnet, dass die Isolierelemente mit eingesteckten Leitermaterialstücken in eine Form gebogen werden, bei welcher die einander abgewandten Endbereiche (11, 12) der Leitermaterialstücke eine im wesentlichen gemeinsame Mittellinie (10) besitzen.

11. Verfahren nach Anspruch 8 oder 9, dadurch gekennzeichnet, dass die Isolierelemente mit den eingeschobenen Leitermaterialstücken in eine Form gebogen werden, bei welcher die einander abgewandten Endbereiche (11, 12) der Leitermaterialstücke Mittelachsen besitzen, die seitlich versetzt und parallel zueinander verlaufen.

## Revendications

1. Étrier connecteur de pontage, pour la connexion électrique mutuelle de composants (3) disposés suivant deux agencements ordonnés différents (2) de composants dans une installation électrique centrale, comprenant au moins un conducteur isolé (4-6) d'une longueur préfixée, le conducteur étant agencé de façon à pouvoir être connecté par ses parties d'extrémité (11, 12) à un composant de chaque agencement ordonné, les agencements ordonnés présentant un espacement standardisé, tandis que le conducteur (4-6) présente l'une et l'autre de ses parties d'extrémité (11, 12) tournées de façon à faire face dans la même direction et qu'un axe ou ligne de connexion mutuelle (10) passant par les parties d'extrémité est disposé d'une manière espacée vis-à-vis d'une partie intermédiaire (9) de l'étrier connecteur de pontage reliant les parties d'extrémité entre elles, caractérisé en ce que chaque conducteur (4-6) comporte un élément d'isolation en forme de tuyau souple, les éléments d'isolation étant reliés entre eux d'une manière espacée par l'intermédiaire de pièces de jonction (7, 8) en matière d'isolation, de façon à former un ensemble.

2. Étrier connecteur de pontage tel que revendiqué à la revendication 1, caractérisé en ce que les parties d'extrémité (11, 12) présentent une ligne centrale (10) pratiquement commune.

3. Étrier connecteur de pontage tel que revendiqué à la revendication 1, caractérisé en ce que les parties d'extrémité (11, 12) présentent des lignes centrales qui sont décalées transversalement et parallèles entre elles.

4. Étrier connecteur de pontage tel que revendiqué à l'une quelconque des revendication 1 à 3, caractérisé en ce qu'il comprend trois conducteurs (4, 6) pratiquement parallèles entre eux.

5. Étrier connecteur de pontage tel que revendiqué à l'une quelconque des revendications 1 à 4, caractérisé en ce qu'il a une longueur qui est égale à un multiple entier de l'espacement des agencements ordonnés dans l'installation électrique centrale.

6. Étrier connecteur de pontage tel que revendiqué à l'une quelconque des revendications 1 à 5, caractérisé en ce que les pièces de jonction (7, 8) ont une largeur supérieure à une fois la dimension transversale extérieure des éléments d'isolation, de préférence une largeur approximativement égale à deux fois cette dimension.

7. Étrier connecteur de pontage tel que revendiqué à l'une quelconque des revendications 1-6, caractérisé en ce que les pièces de jonction (7, 8) ont une forme de ruban ou de bande.

8. Procédé de production d'un étrier connecteur de pontage pour la connexion électrique mutuelle de composants (3) disposés en deux agencements ordonnés de composants dans une installation électrique centrale, consistant à produire des conducteurs isolés (4-6) d'une longueur et une forme préfixée, caractérisé en ce qu'on produit un certain nombre d'éléments tubulaires isolants à partir d'une matière flexible isolante, on donne aux éléments une longueur préfixée et on les réunit mutuellement au moyen de pièces de jonction (7, 8), en ce qu'on coupe un matériau conducteur en forme de tige ou de fil en morceaux ayant une longueur supérieure à celle des éléments isolants et on insère les morceaux de matériau conducteur dans les éléments isolants et en ce qu'on plie à la forme voulue les éléments isolants avec les morceaux de matériau conducteur qui y sont insérés.

9. Procédé tels que revendiqué à la revendication 8, caractérisé en ce qu'on plie les éléments isolants, avec les morceaux de matériau conducteur qui y sont insérés, d'une manière telle que les parties d'extrémité opposées (11, 12) des morceaux de matériau conducteur soient tournées de façon à faire face dans la même direction et qu'une ligne de connexion mutuelle (10) passant par ces parties d'extrémité soit située d'une manière espacée vis-à-vis d'une section intermédiaire (9) reliant entre elles les parties d'extrémité.

10. Procédé tel que revendiqué à l'une quelconque des revendications 8 ou 9, caractérisé en ce qu'on plie les éléments isolants, avec les morceaux de matériau conducteur qui y sont insérés, à une forme dans laquelle les parties d'extrémité opposées (11, 12) des morceaux de matériau conducteur présentent une ligne centrale (10) pratiquement commune.

11. Procédé tel que revendiqué à l'une quelconque des revendications 8 ou 9, caractérisé en ce qu'on plie les éléments isolants, avec les morceaux de matériau conducteur qui y sont insérés, à une forme dans laquelle les parties d'extrémité opposées (11, 12) des morceaux de matériau conducteur présentent des axes centraux qui sont décalés transversalement et parallèles entre eux.
